# FASCICULE DE BREVET EUROPEEN

(11) **EP 0 647 397 B1**
(45) Date de publication et mention de la délivrance du brevet: **17.03.1999**
(21) Numéro de dépôt: 94402239.1
(22) Date de dépôt: 05.10.1994
(51) Int. Cl.: A01M 21/04

(54) **Machine électrolytique de traitement du fond d'un milieu aquatique**
Elektrolytisches Gerät zur Behandlung des Wasserbodens
Electrolytic device for treating the bottom of an aquatic environment

(30) Priorité: 08.10.1993 FR 9311998
(43) Date de publication de la demande: 12.04.1995
(73) Titulaire: Jaffrenou, Bernard, F-83270 Saint Cyr Sur Mer (FR); Oddone, Lucien, 83000 La Cadière (FR)
(72) Inventeur: Jaffrenou, Bernard, F-83270 Saint Cyr Sur Mer (FR); Oddone, Lucien, 83000 La Cadière (FR)
(74) Mandataire: Sabatier, Marc

(56) Documents cités:
- DE-A- 2 328 705
- US-A- 3 769 196
- PATENT ABSTRACTS OF JAPAN vol. 15, no. 508 (C-0897) 24 Décembre 1991 & JP-A-03 224 427 (TONEN CORP) 3 Octobre 1991
- PATENT ABSTRACTS OF JAPAN vol. 16, no. 54 (C-909) 12 Février 1992 & JP-A-03 254 887 (NAKAMURA SHOKO KK) 13 Novembre 1991

## Description

L'invention se rapporte à une machine électrolytique de traitement du fond d'un milieu aquatique ayant une certaine conductibilité électrique. L'invention est plus particulièrement destinée à lutter contre la prolifération de certaines plantes, notamment des algues envahissantes ou néfastes, en milieu marin ou salé.

On sait que depuis quelques années, une algue d'origine tropicale: la Caulerpa Taxifolia, se répand dangereusement dans les océans des zones tempérées, notamment en Méditerranée. La plupart des traitements antialgues pratiqués jusqu'à ce jour font appel à des produits chimiques algicides (métalloïdes tels que le chlore et le brome ou métaux lourds tels que le cuivre, le zinc, etc... ou alcalins, tels que l'ammonium, à l'état pur ou en combinaison de chimie minérale ou organique). Ces produits sont apportés dans l'eau à traiter, au voisinage des algues, ce qui peut avoir des conséquences néfastes sur l'environnement et en particulier au niveau de la chaîne alimentaire.

Par ailleurs, on connaît divers procédés de traitement d'algues planctoniques utilisant l'électrolyse. Dans de tels procédés, l'eau est pompée et traitée dans une installation fixe où se développe l'électrolyse. Un tel procédé est évidemment inapplicable tel quel pour le traitement d'algues implantées sur le fond d'un milieu aquatique.

L'invention concerne une machine électrolytique de traitement du fond d'un milieu aquatique salé et présentant de ce fait une certaine conductibilité électrique, dans le but de détruire certaines algues proliférant sur ledit fond. Elle permet d'obtenir le dépérissement et la mort des algues concernées dans un délai de quelques jours après traitement.

L'idée de base de l'invention consiste à soumettre les algues à un traitement électrolytique grâce à une machine d'électrolyse immergeable, automobile ou au moins susceptible d'être déplacée sur le fond dudit milieu aquatique. L'idée de base consiste à reconstituer au moins approximativement sur le fond une sorte de cuve électrolytique à anode(s) soluble(s). On a en effet remarqué que certaines plantes sous-marines et notamment l'algue Caulerpa Taxifolia, si elle est immergée dans un bain électrolytique libérant des ions métalliques, par exemple des ions cuivre, subit une dégénérescence irréversible aboutissant à sa destruction dans un délai de l'ordre de quelques jours. La machine conforme à l'invention soumet donc les algues à un champ électrolytique, l'eau salée jouant le rôle d'électrolyte et elle est conçue pour confiner l'électrolyte et en particulier les ions métalliques au voisinage d'une zone à traiter.

Plus précisément, l'invention concerne donc une machine électrolytique de traitement du fond d'un milieu aquatique ayant une certaine conductibilité électrique comprenant au moins une paire d'électrodes dont au moins une anode métallique formant anode soluble, connectées à une alimentation électrique, caractérisée en ce qu'elle comporte des moyens de confinement à base ouverte délimitant au moins partiellement un volume à traiter au-dessus dudit fond, en ce que ces moyens de confinement renferment lesdites électrodes de façon à reconstituer approximativement une cuve électrolytique au-dessus dudit fond, et en ce qu'elle comporte en outre des moyens pour déplacer sur ledit fond l'ensemble comprenant lesdites électrodes et lesdits moyens de confinement.

Ainsi, les moyens de confinement renfermant les électrodes reconstituent une sorte de cuve électrolytique virtuelle établie sur le fond même où se situent les algues. Ce fond est bien sûr le fond marin dans le cas de l'algue Caulerpa Taxifolia ou d'une espèce analogue mais il peut s'agir du fond d'un bassin ou d'une piscine lorsque la machine est utilisée dans la lutte contre d'autres proliférations en milieu aquatique salé.

Les moyens de confinement précités peuvent être constitués par un ensemble de plaques isolantes entourant un certain volume de traitement à l'intérieur duquel l'électrolyse est mise en jeu au moyen d'électrodes disposées face à face, les anodes au moins comprenant un métal choisi pour libérer des ions métalliques aptes au traitement recherché.

Selon un mode de réalisation simple, la machine peut être déplacée par câble à l'aide d'un treuil situé dans une embarcation de surface, cette dernière contenant également les moyens d'alimentation électriques destinés à alimenter les électrodes. Dans ce cas, convenant pour de faibles profondeurs, des plongeurs peuvent assurer le positionnement de la machine, de place en place, de façon à traiter de proche en proche, le fond envahi d'algues. Le temps de traitement, pour chaque position de la machine est de l'ordre d'une ou plusieurs minutes. Pour de plus grandes profondeurs, la machine est munie de roues motrices lui permettant de se déplacer lentement sur le fond du milieu aquatique. Ces roues motrices peuvent avantageusement être constituées par des électrodes de la "cuve électrolytique virtuelle" auxquelles on donne une forme de disque.

L'invention sera mieux comprise et d'autres avantages de celle-ci apparaîtront plus clairement à la lumière de la description qui va suivre, de plusieurs modes de réalisation d'une machine électrolytique de traitement du fond d'un milieu aquatique conforme à son principe, donnée uniquement à titre d'exemple et faite en référence aux dessins annexés dans lesquels:
- la figure 1 est une vue schématique d'une machine électrolytique conforme à l'invention;
- la figure 2 est une vue schématique illustrant une variante;
- la figure 3 illustre encore une autre variante comportant des électrodes formant roues;
- la figure 4 est une vue en perspective d'un autre mode de réalisation comportant des électrodes formant roues;
- la figure 5 est une vue en élévation d'un autre mode de réalisation d'une machine conforme à l'invention;
- la figure 6 est une vue selon la flèche VI de la figure 5;
- la figure 7 est une vue de détail de la machine de la figure 5; et
- la figure 8 est une coupe partielle VIII-VIII de la figure 5.

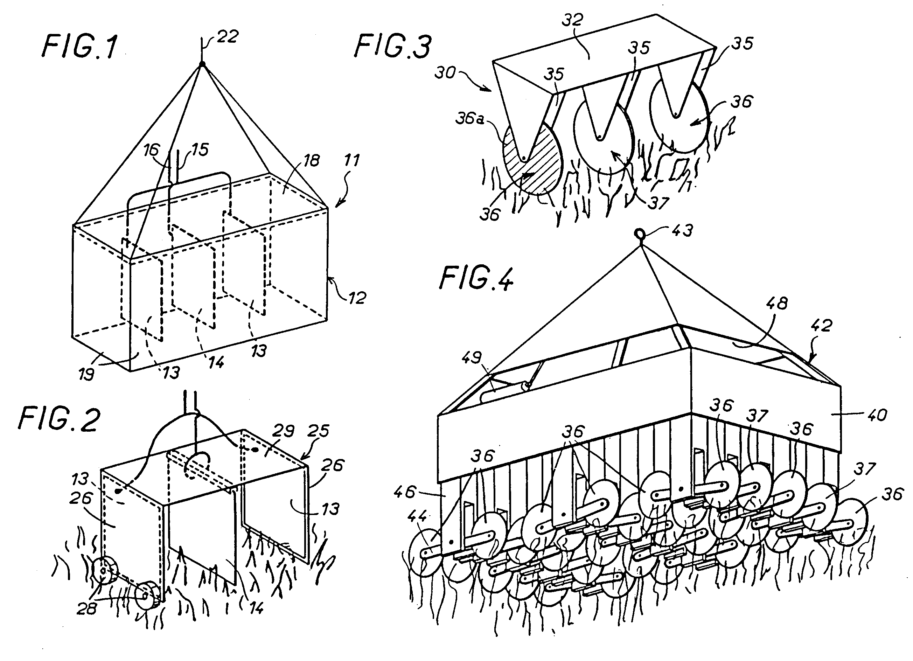

En se reportant plus particulièrement à la figure 1, on a représenté les moyens élémentaires d'une machine électrolytique 11 destinée à être posée sur le fond d'un milieu aquatique ayant une certaine conductibilité électrique. La machine est notamment destinée à traiter le fond marin, lorsque celui-ci est envahi d'algues ou autres plantes dont la prolifération est néfaste, comme par exemple la Caulerpa Taxifolia. La machine comporte essentiellement un caisson 12 sans fond, ici en forme de parallélépipède rectangle, renfermant un système d'électrodes. Dans l'exemple de la figure 1, on remarque deux anodes plates 13, rectangulaires situées en regard et de part et d'autre d'une cathode 14 centrale de mêmes dimensions. Les deux anodes sont connectées à un même conducteur 15 et la cathode à un autre conducteur 16. Ces conducteurs isolés et souples remontent jusqu'à la surface où se trouve une embarcation (non représentée) équipée d'une alimentation électrique en courant continu constituée, par exemple, d'un bloc électrogène et d'une unité de redressement. Le caisson 12 formant les moyens de confinement mentionnés ci-dessus est en matériau isolant et comporte, de préférence, une plaque horizontale supérieure 18, c'est-à-dire perpendiculaire aux électrodes, pour limiter les mouvements de fluide au-dessus des parois latérales 19 du caisson. Par conséquent, lorsque la machine est posée sur le fond du milieu aquatique, elle emprisonne un certain volume d'eau salée ainsi qu'une certaine quantité d'algues à traiter. L'eau salée constitue l'électrolyte de la machine électrolytique. Les anodes sont constituées d'un métal lourd tel que, de préférence, le cuivre, le nickel ou même par exemple le zinc, l'étain ou le plomb. Avec de telles anodes, on a réalisé au niveau du fond et au voisinage des algues à traiter, une cuve électrolytique fictive renfermant un système électrolytique à anode(s) soluble(s). Les anodes vont donc se décomposer en libérant des ions métalliques qui vont imprégner les algues et les tuer. La machine comporte en outre des moyens pour déplacer sur le fond du milieu aquatique l'ensemble comprenant les électrodes et lesdits moyens de confinement. Dans l'exemple de la figure 1, ces moyens sont constitués par un câble 22 relié par des élingues aux angles supérieurs du caisson et remontant jusqu'à l'embarcation de surface pour s'enrouler sur un treuil permettant de soulever la machine. De cette façon un plongeur peut facilement contrôler le déplacement de la machine de proche en proche, sur le fond du milieu aquatique, pour y traiter progressivement les zones envahies par les algues. Dans la pratique, on déplace la machine toutes les minutes environ.

Le mode de réalisation de la figure 2 est différent de celui de la figure 1 en ce que les moyens de confinement sont constitués par une sorte de support ou bâti 25 à profil en U renversé, en matériau isolant. Les deux anodes 13 sont fixées intérieurement aux deux parois latérales 26, verticales, de ce support tandis que la cathode 14 s'étend verticalement entre les deux anodes, en étant fixée au milieu de la base du support en U. Dans ce mode de réalisation, on remarque que les moyens de confinement sont ouverts sur deux faces parallèles opposées, perpendiculaires au sens de déplacement. On peut ainsi envisager de déplacer lentement et continûment la machine sur le fond du milieu aquatique de façon à traiter toute une bande d'algues. Dans un tel mode de réalisation, on peut avantageusement prévoir des roues 28 sur les côtés des parois latérales 26 isolantes desdits moyens de confinement. La paroi horizontale supérieure 29 permet, comme précédemment, de limiter les mouvements de fluide au-dessus des parois latérales et, par conséquent, de maintenir la concentration des ions métalliques dans l'espace de traitement.

Plus généralement, la machine peut comporter un groupe de plusieurs électrodes planes, en regard les unes des autres, et connectées électriquement à l'alimentation électrique de surface de façon à constituer une succession alternée d'anodes et de cathodes.

L'exemple de la figure 3 montre que la machine peut être constituée d'un bâti 30 comportant de préférence une paroi horizontale supérieure 32 sous laquelle sont agencées des chapes 35. Des roues 36, 37 montées dans ces chapes constituent les électrodes elles-mêmes. Dans l'exemple, les roues 36 forment des anodes et la roue 37 forme une cathode. Dans ce mode de réalisation, en vue de conserver un certain confinement, les roues formant électrodes et qui sont situées au voisinage de l'extérieur du bâti sont recouvertes extérieurement de matériau isolant. Ce revêtement isolant, qui garnit ici les faces extérieures 36a des anodes, définit au moins en partie les moyens de confinement précités. Ce mode de réalisation ainsi que celui de la figure 2 peut être en outre équipé d'une jupe latérale, par exemple en matériau souple, entourant la zone à traiter.

Dans l'exemple de la figure 4, on a prévu une pluralité d'électrodes formant roues 36, 37 montées à la partie inférieure d'un bâti 40. Ce bâti est lui-même surmonté d'une armature pyramidale 42 munie d'un anneau de levage 43 à sa partie supérieure. L'anneau est bien entendu relié par un câble de traction à l'embarcation de surface. Les fils électriques d'alimentation des électrodes en forme de roues ne sont pas représentés. Comme précédemment, les roues 36 sont des anodes et les roues 37 sont des cathodes. Dans cet exemple, les électrodes en forme de roues sont toutes agencées dans des plans parallèles de façon à définir une direction de déplacement. De plus, les roues sont regroupées par paires. Chaque roue d'une paire est montée à une extrémité d'un levier 44 formant double chape. Ce levier est articulé sensiblement en son milieu à un montant 46 porté par le bâti 40. Comme dans l'exemple de la figure 3, les faces extérieures des roues formant électrodes situées au voisinage des côtés du bâti 40 qui sont parallèles au sens de déplacement, sont recouvertes extérieurement de matériau isolant, ce revêtement définissant au moins en partie les moyens de confinement précités. De plus, l'armature pyramidale 42 surmontant le bâti abrite un réservoir d'air 48 agencé en chambre respirante et s'étendant au-dessus de l'ensemble des électrodes en forme de roues. On entend par réservoir d'air formant chambre respirante, un réservoir sans fond rempli d'air. Il a pour effet d'assurer à la machine une faible flottabilité négative facilitant son déplacement sur le fond, souvent accidenté, du milieu aquatique. En fonction de la profondeur, la pression de l'air à l'intérieur de ce réservoir varie et, pour maintenir le volume d'air désiré, une bouteille d'air comprimé 49 portée par le bâti 40 est prévue pour injecter, sur commande, de l'air dans le réservoir. Il est à noter que ce réservoir d'air agencé juste au-dessus des électrodes 36, 37 contribue aussi à limiter les mouvements de fluide au-dessus des parois latérales de la cuve électrolytique fictive. Une jupe en matériau isolant souple peut entourer l'ensemble des roues formant électrodes.

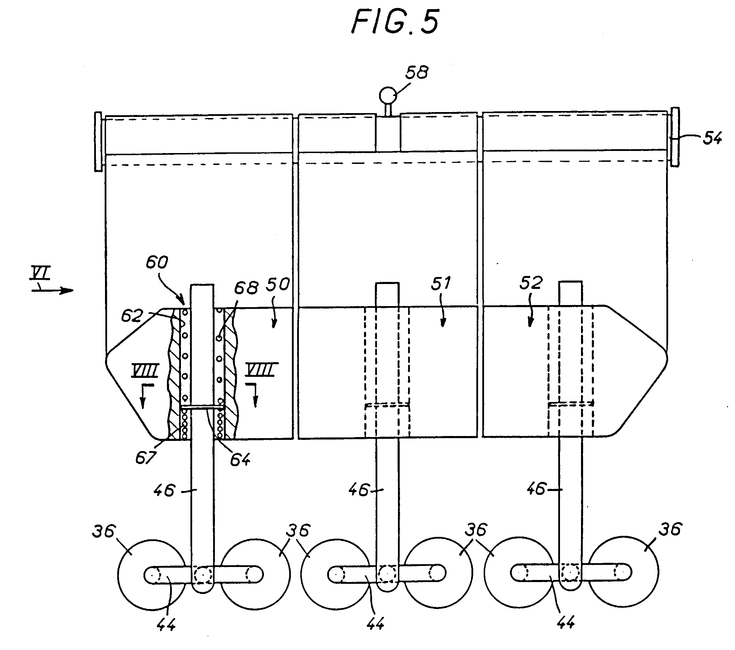

Les figures 5 à 8 illustrent un autre mode de réalisation dérivé de celui de la figure 4 et comportant également une pluralité de paires de roues 36, 37 formant anodes et cathodes. Cette machine est constituée de trois bâtis distincts 50, 51, 52 agencés les uns derrière les autres et portant chacun un jeu d'électrodes, en l'occurrence cinq paires de roues. Ces bâtis sont articulés de façon pendulaire à un arbre supérieur 54 longitudinal, s'étendant parallèlement à la direction de déplacement. Plus précisément, chaque bâti est relié à l'arbre longitudinal par une armature triangulaire 56 comportant à sa partie supérieure un élément annulaire 57 pivotant sur l'arbre. Ce dernier est surmonté d'un anneau de levage 58, comme dans le mode de réalisation de la figure 4. De cette façon, les différents bâtis 50, 51, 52 peuvent prendre des inclinaisons différentes les uns par rapport aux autres en se déplaçant sur le fond du milieu aquatique, ce qui augmente sa stabilité si le fond est très accidenté.

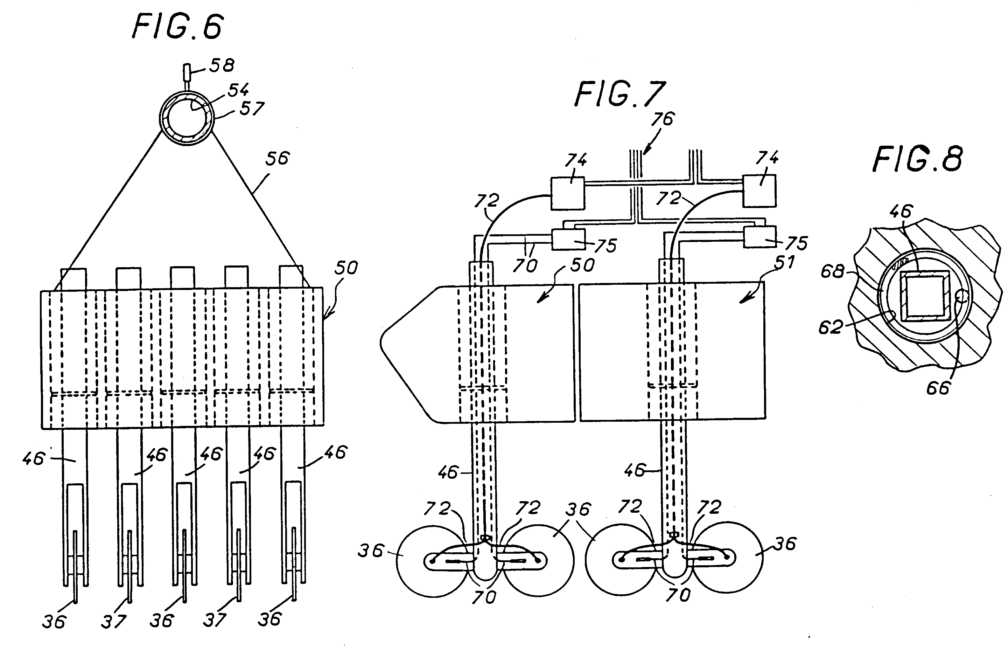

Comme dans le mode de réalisation de la figure 4, les roues d'une paire sont montées aux extrémités d'un levier 44 articulé en son milieu à un montant 46 (vertical lorsque la machine est sur un plan horizontal). Chacun de ces montants 46 est mobile à l'intérieur du bâti 50, 51, 52 et solidaire d'un amortisseur 60 autorisant un déplacement du montant selon son propre axe longitudinal. Plus précisément, comme le montrent les figures 5 et 8, le montant 46 d'une paire de roues a une section carrée et est monté coulissant sans possibilité de rotation dans un trou 62 du bâti. Pour ce faire, les faces inférieure et supérieure du bâti sont percées de trous carrés recevant ledit montant. Le trou 62 est cylindrique et abrite un piston 64 en forme de disque, solidaire du montant 46. Ce piston est percé d'un petit trou d'équilibrage 66. Deux ressorts 67, 68 sont montés dans le trou du bâti et prennent appui de part et d'autre du piston. Avec un tel agencement, il est clair que le montant 46 portant les deux roues formant électrodes peut se déplacer lentement par rapport au bâti (la vitesse dépend du diamètre du trou d'équilibrage) ce qui permet audit montant de se rétracter plus ou moins à l'intérieur du bâti pour l'adaptation de la machine au relief du fond du milieu aquatique.

Comme représenté à la figure 7, chaque montant 46 est creux et abrite notamment les fils électriques 70 alimentant chaque électrode en forme de roue. De plus, certaines roues au moins sont motrices, ce qui permet d'utiliser la machine à des profondeurs importantes où elle doit pouvoir se déplacer de façon autonome. Dans ce cas, les roues motrices sont couplées par un pignon et une vis sans fin à un câble de transmission flexible 72 lui-même entraîné en rotation par un moteur électrique 74 porté par le bâti. Le câble de transmission flexible est également engagé à l'intérieur du montant 46.

Un changement de direction peut être obtenu en faisant varier les vitesses des moteurs 74 couplés aux roues droites et gauches. Les fils électriques 70 de toutes les anodes et ceux de toutes les cathodes sont connectés par des boîtes de raccordement 75 à un toron flexible remontant jusqu'à l'embarcation de surface. Il en est de même des fils d'alimentation des moteurs 74.

Bien entendu, la machine illustrée aux figures 6 à 8 peut être équipée, à sa partie supérieure, d'un réservoir d'air formant chambre respirante. Comme dans le mode de réalisation précédent, les électrodes en forme de roues les plus extérieures, sont recouvertes sur leurs faces externes, d'un matériau isolant. En outre, ce mode de réalisation comme celui de la figure 4, peut comporter une jupe latérale souple entourant l'ensemble des électrodes, à la partie inférieure des bâtis ou de chacun d'eux.

Il est à noter enfin que, dans les versions destinées à évoluer de façon autonome à grande profondeur, la machine peut être équipée de moyens de déroulement d'un fil de repérage ou analogue (constituant une sorte de fil d'Ariane) propre à permettre de visualiser son trajet sur le fond du milieu aquatique et de guider ainsi sa progression, de façon à réaliser un balayage en va-et-vient traitant des bandes parallèles et non disjointes du fond recouvert d'algues. Bien entendu, ces machines autonomes sont également pourvues de moyens d'éclairage et de caméras vidéo permettant de guider le déplacement de la machine en évitant ou en surmontant les obstacles.

## Revendications

1. Machine électrolytique de traitement du fond d'un milieu aquatique ayant une certaine conductibilité électrique, comprenant au moins une paire d'électrodes (13, 14, 36, 37) dont au moins une anode métallique (13, 36) formant anode soluble, connectées à une alimentation électrique, caractérisée en ce qu'elle comporte des moyens de confinement (12) à base ouverte délimitant au moins partiellement un volume à traiter au-dessus dudit fond, en ce que ces moyens de confinement renferment lesdites électrodes (13, 14, 36, 37) de façon à reconstituer approximativement une cuve électrolytique au-dessus dudit fond, et en ce qu'elle comporte en outre des moyens (22, 72-74) pour déplacer sur ledit fond l'ensemble comprenant lesdites électrodes et lesdits moyens de confinement.

2. Machine selon la revendication 1, caractérisée en ce que lesdits moyens de confinement comportent au moins deux parois isolantes latérales (26) parallèles s'étendant sensiblement parallèlement à une direction de déplacement.

3. Machine selon la revendication 1 ou 2, caractérisée en ce que les faces extérieures d'au moins certaines électrodes sont accolées auxdites parois isolantes.

4. Machine selon la revendication 2 ou 3, caractérisée en ce qu'elle comprend des moyens (18, 29, 32) pour limiter les mouvements de fluide au-dessus desdites parois latérales.

5. Machine selon l'une des revendications précédentes, caractérisée en ce que lesdits moyens de confinement comportent une jupe latérale entourant une zone à traiter.

6. Machine selon l'une des revendications précédentes, caractérisée en ce qu'elle comprend au moins un groupe de plusieurs électrodes planes (13-14, 36-37), en regard les unes des autres, connectées électriquement à ladite alimentation électrique pour former une succession alternée d'anodes et cathodes.

7. Machine selon l'une des revendications précédentes, caractérisée en ce qu'elle comprend au moins un bâti (25-30) supportant lesdites électrodes et des roues (28, 36-37) en contact avec ledit fond du milieu aquatique.

8. Machine selon la revendication 7, caractérisée en ce que certaines roues (36, 37) au moins sont constituées par des électrodes précitées.

9. Machine selon la revendication 7 ou 8, caractérisée en ce que lesdites roues sont regroupées par paires, chaque roue d'une paire étant montée à une extrémité d'un levier (44) articulé sensiblement en son milieu à un montant (46) porté par ledit bâti.

10. Machine selon la revendication 9, caractérisée en ce que ledit montant est mobile et solidaire d'un amortisseur (60).

11. Machine selon l'une des revendications 8 à 10, caractérisée en ce que les roues (36) formant électrodes, situées au voisinage de l'extérieur du bâti, sont recouvertes extérieurement de matériau isolant (36a), ce revêtement définissant au moins en partie les moyens de confinement précités.

12. Machine selon l'une des revendications 7 à 11, caractérisée en ce que certaines roues au moins sont motrices, par exemple mécaniquement couplées à au moins un moteur électrique (74) porté par ledit bâti.

13. Machine selon l'une des revendications 7 à 12, caractérisée en ce qu'elle est constituée de plusieurs bâtis (50, 51, 52) agencés les uns derrière les autres et portant chacun un jeu d'électrodes et en ce que lesdits bâtis sont articulés de façon pendulaire autour d'un arbre (54).

14. Machine selon l'une des revendications précédentes, caractérisée en ce qu'il comporte un réservoir d'air (48) au-dessus desdites électrodes, agencé en chambre respirante et propre à assurer à ladite machine une faible flottabilité négative.

15. Machine selon l'une des revendications précédentes, caractérisée en ce qu'elle est munie de moyens de déroulement d'un fil de repérage ou analogue, propre à permettre de visualiser son trajet sur ledit fond du milieu aquatique.

## Claims

1. Electrolytic machine for treating the bottom of an aquatic medium possessing a certain electric conductibility and including at least one pair of electrodes (13, 14, 36, 37) with at least one metal anode (13, 36) forming a soluble anode, said electrodes connected to an electric power supply, characterised in that it comprises confinement means (12) with an open base delimiting, at least partially, a volume to be treated above said bottom, in that these confinement means contain said electrodes (13, 14 (36, 37) so as to approximately reconstitute an electrolytic tank above said bottom, and in that it further comprises means (22, 72-74) to move on said bottom the unit including said electrodes and said confinement means.

2. Machine according to claim 1, characterised in that said confinement means comprise at least two parallel non-conducting lateral walls (26) extending approximately parallel to a displacement direction.

3. Machine according to claim 1 or 2, characterised in that the outer faces of at least some of the electrodes are glued to said non-conducting walls.

4. Machine according to claim 2 or 3, characterised in that it includes means (18, 29, 32) to limit the movements of fluids above said lateral walls.

5. Machine according to one of the preceding claims, characterised in that said confinement means comprise a lateral skirt encompassing a zone to be treated.

6. Machine according to one of the preceding claims, characterized in that it includes at least one set of several flat electrodes (13-14, 36-37) opposite one another and connected electrically to said electric power source so as to form an alternate succession of anodes and cathodes.

7. Machine according to one of the preceding claims, characterized in that it includes at least one frame (25-30) supporting said electrodes and wheels (28, 36-37) in contact with said bottom of the aquatic medium.

8. Machine according to claim 7, characterised in that at least certain wheels (36, 37) are constituted by said electrodes.

9. Machine according to claim 7 or 8, characterized in that said wheels are grouped into pairs, each wheel of a pair being mounted at one extremity of a lever (44) joined approximately at its middle to a stanchion (46) borne by said frame.

10. Machine according to claim 9, characterised in that said stanchion is mobile and integral with a damper (60).

11. Machine according to one of claims 8 to 10, characterised in that the wheels (36) forming the electrodes, situated close to the outside of the frame, are externally coated with a non-conducting material (36a), this coating defining at least in part said confinement means.

12. Machine according to one of claims 7 to 11, characterised in that at least certain wheels are driving, for example mechanically coupled to at least one electric motor (74) borne by said frame.

13. Machine according to one of claims 7 to 12, characterised in that it is formed of several frames (50,51,52) disposed with one behind another and each bearing a set of electrodes and in that said frames are joined oscillating around a shaft (54).

14. Machine according to one of the preceding claims, characterised in that it comprises an air tank (48) above said electrodes, fitted in a breathing chamber and able to provide said machine with a weak negative buoyancy.

15. Machine according to one of the preceding claims, characterised in that it is fitted with means for unwinding a marking wire or similar element able to visualize its path on said bottom of the aquatic medium.

## Patentansprüche

1. Elektrolytmaschine zur Behandlung des Bodens einer wässrigen Umgebung mit einer gewissen elektrischen Leitfähigkeit, wenigstens ein Paar von Elektroden umfassend, (13, 14, 36, 37) von denen wenigstens eine metallische Anode (13, 36) die lösliche Anode bildet und die mit einer elektrischen Versorgung verbunden sind, dadurch gekennzeichnet, daß sie Hüllmittel (12) mit offener Basis umfaßt, die wenigstens teilweise ein zu be handelndes Volumen oberhalb dieses Bodens begrenzen, daß diese Hüllmittel diese Elektroden (13, 14, 36, 37) einschließen, derart, daß in etwa eine elektrolytische Wanne oberhalb dieses Bodens wiederhergestellt wird und daß sie im übrigen Mittel (22, 72-74) umfaßt, um auf diesem Boden die Anordnung zu bewegen oder zu verschieben, welche diese Elektroden und diese Hüllmittel umfaßt.

2. Maschine nach Anspruch 1, dadurch gekennzeichnet, daß diese Hüllmittel wenigstens zwei isolierende seitliche parallele Wände (26) umfassen, die sich im wesentlichen parallel zu einer Verschiebungsrichtung erstrecken.

3. Maschine nach Anspruch 1 oder 2, dadurch gekennzeichnet, daß die Außenseiten wenigstens gewisser Elektroden zum Haften an diesen isolierenden Wandungen gebracht sind.

4. Maschine nach Anspruch 2 oder 3, dadurch gekennzeichnet, daß sie Mittel (18, 29, 32) umfaßt, um die Fluidbewegungen oberhalb dieser seitlichen Wandungen zu begrenzen.

5. Maschine nach einem der vorhergehenden Ansprüche, dadurch gekennzeichnet, daß die Hüllmittel eine seitliche eine zu behandelnde Zone umschließende Schürze umfassen,

6. Maschine nach einem der Vorhergehenden Ansprüche, dadurch gekennzeichnet, daß wenigstens eine Gruppe mehrerer planer Elektroden (13-14, 36-37), einander gegenüber, umfaßt, die elektrisch mit dieser elektrischen Versorgung verbunden sind, um eine wechselnde Aufeinanderfolge von Anoden und Kathoden zu bilden.

7. Maschine nach einem der vorhergehenden Ansprüche, dadurch gekennzeichnet, daß sie wenigstens ein Gestell (25-30) umfaßt, das diese Elektroden abstützt sowie Räder (28, 36-37) in Kontakt mit diesem Boden der wässrigen Umgebung.

8. Maschine nach Anspruch 7, dadurch gekennzeichnet, daß gewisse Räder (36, 37) wenigstens durch Vorgenannte Elektroden gebildet sind.

9. Maschine nach Anspruch 7 oder 8, dadurch gekennzeichnet, daß diese Räder zu Paaren zusammengefaßt sind, wobei jedes Rad eines Paares an einem Ende eines Hebels (44) gelagert ist, der im wesentlichen in seiner Mitte gelenkig bezüglich eines Ständers (46) ist, der von diesem Gestell getragen ist.

10. Maschine nach Anspruch 9, dadurch gekennzeichnet, daß dieser Ständer beweglich und fest bezüglich eines Dämpfungsgliedes (60) ist.

11. Maschine nach einem der Ansprüche 8 bis 10, dadurch gekennzeichnet, daß die Elektroden bildenden Räder (36), die benachbart dem Ende des Gestells sich befinden, außen von isolierendem Material (36a) bedeckt sind, wobei dieser Überzug wenigstens zum Teil die genannten Hüllmittel definiert.

12. Maschine nach einem der Ansprüche 7 bis 11, dadurch gekennzeichnet, daß wenigstens gewisse Räder angetrieben sind, beispielsweise mechanisch mit wenigstens einem Elektromotor (74) gekoppelt sind, der von diesem Gestell getragen ist.

13. Maschine nach einem der Ansprüche 7 bis 12, dadurch gekennzeichnet, daß sie durch mehrere Gestelle (50, 51, 52) gebildet ist, welche die einen hinter den anderen ausgebildet sind und je einen Satz von Elektroden tragen und daß diese Gestelle pendelnd um eine Welle (54) gelenkig sind.

14. Maschine nach einem der vorhergehenden Ansprüche, dadurch gekennzeichnet, daß sie einen Luftspeicher (48) oberhalb dieser Elektroden umfaßt, der als Saugkammer ausgebildet ist und so eingerichtet ist, daß er dieser Maschine einen geringen negativen Auftrieb verleiht.

15. Maschine nach einem der vorhergehenden Ansprüche, dadurch gekennzeichnet, daß sie mit Mitteln für den Ablauf eines Markierungsfadens oder -drahts oder analog ausgestattet ist, einer Ausgestaltung derart, daß sein Weg auf diesem Boden der wässrigen Umgebung sichtbar gemacht wird.
